Europäisches Patentamt

European Patent Office

Office européen des brevets

(11) Publication number: **0 042 156**
A1

(12) **EUROPEAN PATENT APPLICATION**

(21) Application number: 81104537.6

(22) Date of filing: 12.06.81

(51) Int. Cl.³: **F 16 D 65/16, F 16 J 1/00**

(30) Priority: 13.06.80 IT 721080

(43) Date of publication of application: 23.12.81
Bulletin 81/51

(84) Designated Contracting States: CH DE FR GB IT LI

(71) Applicant: **TARONI & C. S.a.s., Via Gramsci, 3,
I-22043 Galbiate (Como) (IT)**

(72) Inventor: **Taroni, Giovanni, Via Lecco, 6, I-22043 Galblate
(Como) (IT)**

(74) Representative: **Borella, Ada, Ing. A. Racheli & C. Viale
San Michele del Carso, 4, I-20144 Milan (IT)**

(54) **An operating member for a brake shoe.**

(57) A brake actuating piston is formed of a metal por-
tion (5), preferably of stainless steel, which is arranged
at the outwardly facing end of the piston and which is
connected with a heat insulating block (3), both being
contained within a metal body (1), which contacts only
the heat insulating block (3) and provides the sealing
with the cylinder.

Applicant:

TARONI & C. S.a.s.

Via Gramsci, 3

22043 GALBIATE (Como) Italy

"AN OPERATING MEMBER FOR A BRAKE SHOE"

This invention relates to an operating member driving a brake shoe, such as an automotive brake. Normally this operating member is provided in the form of a piston-cylinder unit which is operated by pressure oil. Thus, this fluid is subjected to the enormous heat developed by the brakes, particularly in racing cars the heat is readily transmitted from the brake shoe to the plunger and therefrom to oil. This causes a failure in brake operation, just in the course of a braking.

Therefore, it is the object of the present invention to provide an operating member for the brake shoe which is reliable in operation even when the shoe reaches a considerable temperature.

The above specified object has been accomplished according to the present invention by providing that the brake shoe is operated by a metal portion having a good mechanical strength and reduced heat conductivity, which portion is made integral with a block of heat insulating material, which is retained within a metal body providing the sealing with the cylinder, the connection between said body and said insulating block being provided so that the body contacts only the insulating block and not the metal portion.

A preferred approach of the invention provides that the metal portion of good mechanical strength and reduced heat conductivity is particularly formed of a disc made of stainless steel.

A further preferred approach of the invention provides that the connection between said disc and insulating block is obtained by upsetting a projecting portion of the disc. Preferably, the body is also connected to the insulating block by means of a rim of the body on the insulating block. It is also provided that the body would receive said insulating block in a cavity having such a depth that said portion of good mechanical strength can project to the outside.

The invention will now be further described with reference to an exemplary embodiment shown in the figures of the accompanying drawings, in which:

Fig. 1 is an exploded wiew of an operating member according to the present invention;

Fig. 2 is a sectional view of the same member when assembled; and

Fig. 3 is a view showing a portion of a cylinder in which the operating member according to the present invention is mounted.


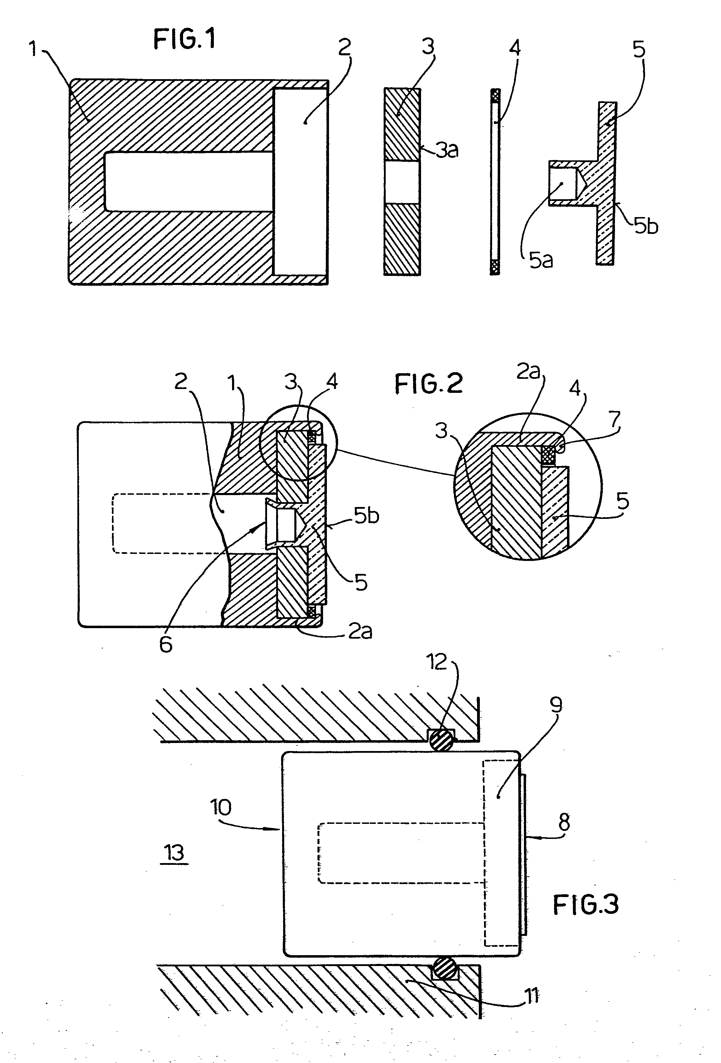

Referring to the accompanying drawings, it will be seen that reference numeral 1 designates the piston or plunger body, reference numeral 2 a central cavity thereof in which the insulating block 3 can be accomodated, having applied thereon the metal portion 5 made in the form of a disc of stainless steel having at the rear a projection provided with a hole 5a. A washer 4 can be interposed between said insulating block 3 and metal portion or disc 5. The depth of cavity 2 is such that upon completion of assembling of insulating block 3, disc 5 and in case washer 4, the outermost surface 5b of disc 5 is at such a position as to protect beyond any part of body 1 and particularly rim 7, which has been shown in Fig. 2.


The disc 5 of stainless steel is secured to the insulating block 3, for example, by upsetting the walls of its hole 5a, as shown at 6 in Fig. 2. The fastening of insulating block 3 to body 1 occurs by beading lip 2a on block 3 inserted in said cavity 2, thus forming the rim 7.

T

The diameter of disc 5 is such as to cover most of the surface 3a facing outwardly of the insulating block 3, but such as to remain spaced apart from body 1 so that the latter does not transmit any heat to said body 1.

Fig. 3 shows a portion of the cylinder body designated at 11, which comprises sealings 12 relative to body 1. Oil in space 13 exerts a pressure on the inner surface 10 of body 1.

- 5 -

0042156

TARONI & C. S.a.s.


## C L A I M S


1.    An operating member for a brake shoe, characterized by comprising a metal portion (5) having a good mechanical strength and reduced heat conductivity, which is made integral with a block '4) of heat insulating material, which is retained in a metal body (1) providing the sealing with the cylinder, the connection between said body (1) and said insulating block ( 3) being provided so that the body would contact only the insulating block (3) and not the metal portion (5).

2.    An operating member according to Claim 1, characterized in that said metal portion (5) of good mechanical strength and reduced heat conductivity comprises a disc of stainless steel.

3.    An operating member according to Claim 2, characterized in that said metal portion (5) has a projection provided with a hole (59) the walls of which may be upset on the insulating block (13) so as to be secured thereto.

4.    An operating member according to any of the preceding claims, characterized in that said body (1) is connected to said insulating block (3) by beading of a lip (2a) on body (1).

5.     An operating member according to any of the preceding claims, characterized in that the outer surface of the metal portion (5) is such as to project from the body (1).

1/1
0042156

FIG.1

FIG.2

FIG.3

European Patent Office

**EUROPEAN SEARCH REPORT**

0042156

Application number

EP 81 10 4537.6

## DOCUMENTS CONSIDERED TO·BE RELEVANT

| Category | Citation of document with indication, where appropriate, of relevant passages | Relevant to claim |
|---|---|---|
| | GB - A - 2 021 219 (SUMITOMO) <br> * claims 1, 4; fig. 4 to 7 * <br> -- | 1 |
| | DE - U1-7 837 265 (KNORR-BREMSE) <br> * fig. 1 to 5 * <br> -- | 1 |
| | DE - A1 - 2 722 194 (TEXTAR) <br> * fig. * <br> -- | 1 |
| A | US - A - 4 203 354 (CUNNINGHAM) <br> ---- | |

**CLASSIFICATION OF THE APPLICATION (Int. Cl.³)**

F 16 D 65/16

F 16 J 1/00

**TECHNICAL FIELDS SEARCHED (Int. Cl.³)**

F 16 D 65/00

F 16 J 1/00

**CATEGORY OF CITED DOCUMENTS**

X: particularly relevant
A: technological background
O: non-written disclosure  .
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 27-08-1981 | LUDWIG |

EPO Form 1503.1  06.78